# EUROPEAN PATENT SPECIFICATION

(11) **EP 2 617 237 B1**
(45) Date of publication and mention of the grant of the patent: **13.12.2017**
(21) Application number: 10855783.6
(22) Date of filing: 13.08.2010
(51) Int. Cl.: H04W 36/24, H04W 8/24, H04W 28/06, H04W 36/08, H04W 76/02, H04W 88/08

(54) **METHODS AND DEVICES FOR PROVIDING INFORMATION IN A CELLULAR WIRELESS COMMUNICATION SYSTEM**
VERFAHREN UND GERÄTE ZUR BEREITSTELLUNG VON INFORMATION IN EINEM DRAHTLOSEN ZELLENKOMMUNIKATIONSSYSTEM
PROCÉDÉS ET DISPOSITIFS ADAPTÉ POUR FOURNIR DES INFORMATIONS DANS UN SYSTÈME DE COMMUNICATION CELLULAIRE SANS FIL

(43) Date of publication of application: 24.07.2013
(73) Proprietor: Huawei Technologies Co., Ltd., Longgang District Shenzhen, Guangdong 518129 (CN)
(72) Inventor: LEGG, Peter, 175 69 J-rf-lla (SE); OLOFSSON, Henrik, S-930 15 Bure- (SE); JOHANSSON, Johan, 19634 Kungsangen (SE); WANG, Xuelong, Shenzhen Guangdong 518129 (CN)
(74) Representative: Körber, Martin Hans
(86) International application number: PCT/CN2010/075980
(87) International publication number: WO 2012/019362

(56) References cited:
- WO-A1-2009/098048
- WO-A2-2008/086460
- CN-A- 101 400 088
- CN-A- 101 562 851
- HUAWEI: "UE RLF report for Mobility Robustness Optimisation", 3GPP DRAFT; R3-100899 UE RLF REPORT FOR MOBILITY ROBUSTNESS OPTIMISATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20100222, 12 February 2010 (2010-02-12), XP050424645, [retrieved on 2010-02-12]
- HUAWEI: "UE RLF report", 3GPP DRAFT; R2-102913 UE RLF REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 3 May 2010 (2010-05-03), XP050423056, [retrieved on 2010-05-03]
- HUAWEI: "UE RLF report", 16 February 2010 (2010-02-16), 3GPP DRAFT; R2-101265 UE RLF REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050421784, [retrieved on 2010-02-16] * the whole document *
- HUAWEI ET AL: "Inclusion of UE RLF Report in RLF INDICATION message", 3GPP DRAFT; R3-101225_UE_RLF_REPORT_CR36423_0358, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20100222, 1 March 2010 (2010-03-01), XP050424992, [retrieved on 2010-03-01]

## Description

### Technical Field

The present invention relates to a method for providing information in a cellular wireless communication system, or more particularly to a method according to the preamble of claim 1. Furthermore, the invention also relates to a method in a mobile station, a method in a base station, a computer program, a computer program product, a mobile station device and a base station device.

### Background of the Invention

Normally a mobile station (MS) in active mode in a cellular wireless communication system is handed over from one cell to the next as it moves through the system, and data can be transmitted and received without significant interruptions due to these handovers.

A handover (HO) procedure can consist of many steps. In many cellular wireless communication systems a HO is: 1) network controlled, i.e. the MS is commanded by the network when to connect to another cell; 2) prepared, i.e. the target cell to which the MS is moving to is prepared; and 3) MS assisted, i.e. the MS provides measurement reports before HO to the serving cell to assist the decision to do HO preparation of target cell(s), and when to leave the serving cell/connect to the target cell.

In the context of HO, the serving cell before HO is often referred to as the source cell. After successful HO the target cell becomes the new serving cell. In Long Term Evolution (LTE) the HO is a "hard handover", which means that the UE radio link is switched from one (source) cell to another (target) cell. In Universal Mobile Telecommunications System (UMTS) hard handovers are used exclusively for TDD mode, but may also be used for FDD mode.

In the following discourse, the focus is on the intra frequency LTE HO procedure, but the procedures are similar for the LTE inter Radio Access Technology (RAT) and LTE inter frequency HO procedures. The intra E-UTRAN in RRC_CONNECTED state is a User Equipment (UE) assisted network controlled HO, with HO preparation signalling in E-UTRAN.

A HO is initially triggered by a measurement report sent from a UE to a serving eNB (E-UTRAN NodeB). The serving eNB configures how the UE shall take measurements, and under what conditions a measurement report shall be triggered and sent to the eNB.

To assist mobility control decisions, the UE can measure several different cells and report the results to the network. Different networks and network deployments can have different detailed behaviour, but in most systems it is natural to trigger HO when signal reception from a target cell is better than from a source cell.

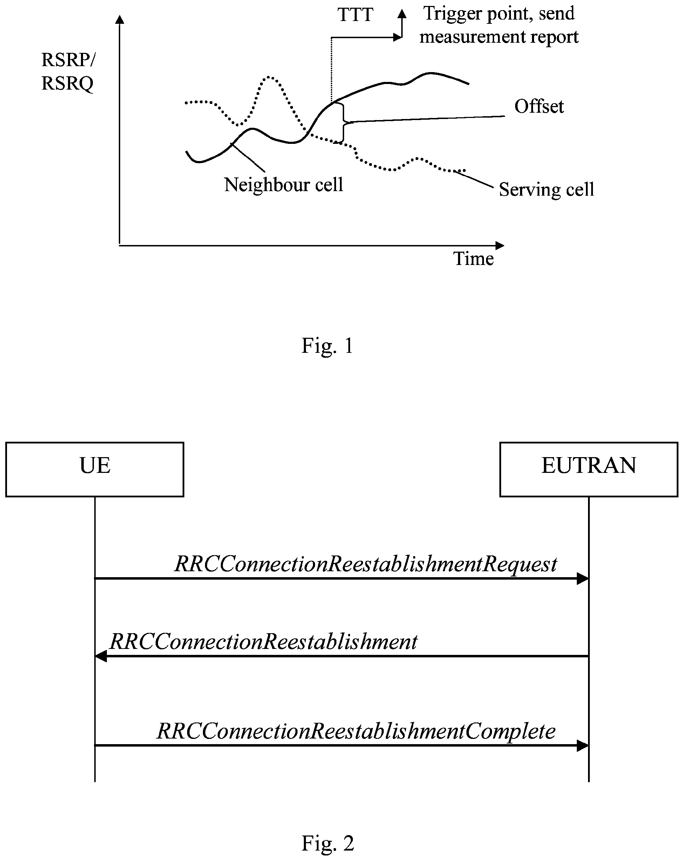

For the case of intra-frequency HO in a reuse-one system (i.e. in a system where the source cell and the target cell uses exactly the same frequency resources) there are strong interference management benefits in (always) keeping the UE connected to the cell with the best signal strength. In the measurement report, the UE includes the reason for the trigger of a HO, e.g. target cell signal stronger than serving cell signal, and measurements of a Reference Signal Received Power (RSRP) or Reference Signal Received Quality (RSRQ) of the serving cell and several neighbour cells including the target cell. To reduce ping-pong effects where a UE is handed over repeatedly between two cells a HO offset is often added to the HO trigger condition: target cell signal should be better than the serving cell signal by an offset, wherein the offset value > 0 dB. Figure 1 shows a typical scenario in which a UE performs mobility measurements.

When a serving eNB receives a measurement report from a UE and if the eNB wishes to HO the UE to another cell, the eNB performs a HO preparation to that cell. HO preparation involves a signalling exchange between one (serving) eNB and another (target) eNB. The source cell requests the HO (*Handover Request*) and passes over UE context information; and the target cell decides if it can admit the UE (*Call Admission Control*) and either accepts or rejects the HO. In an acceptance message (*Handover Request Ack*), the target cell includes parameters required by the UE to allow it to communicate to the target cell - these parameters being grouped into a transparent container. The source cell may prepare multiple cells for HO. Following a successful preparation, the HO execution takes place. The source cell issues a HO Command to the UE - this is the *RRCConnectionReconfiguration* message and carries the transparent container. If, and when, the UE receives this message correctly the UE synchronises to the new target cell and sends a synchronisation message on the Random Access Channel (RACH). The target cell then issues an allocation to the UE so that the UE can send a HO confirmation message to the target cell (*RRCConnectionReconfiguration-Complete message).*

In the final steps (*Handover Completion*), which do not involve the UE, the source eNB (serving the source cell) is able to forward data (un-acknowledged downlink packets) to the target eNB (serving the source cell), and the S1-U interface from the Serving Gateway (S-GW) must be switched from the source to the target cell ("path switch"). Finally, if the handover is successful, the target eNB issues a *UE Context Release* message to the source eNB.

However, it is possible for a HO to fail at different points because of a Radio Link Failure (RLF) or a failure by the RACH. A RACH failure during a HO is called "Handover Failure" in 3GPP TS36.331, but for the remainder of this disclosure the term HO failure is used to comprise both RLF and RACH failures.

After a HO failure, the UE attempts a RRC re-establishment which is described in specifications 3GPP TS36.300 and 3GPP TS36.331. The UE firstly tries to find the strongest cell that it can detect ("cell selection"), and then the UE sends a *RRCConnectionReestablishmentRequest* to the cell that it has selected. If this selected cell has prior knowledge of the UE and details regarding the UE connection (e.g. security parameters, which is called "UE Context") then the cell can send a *RRCConnectionReestablishment* and the re-establishment will succeed which means that the UE remains in Radio Resource Control (RRC) connected state.

If however the UE context is lacking the re-establishment request is rejected and the UE drops to RRC idle state, which results in further delay before the UE can transit to RRC connected state and recommence any data communication. The "UE Context" may be passed to a cell during the HO procedure or at some other point in time. This transfer is called HO Preparation. Note also that the *RRCConnectionReestablishmentRequest* carries three fields, the Cell Radio Network Temporary Identifier (C-RNTI) of the UE in the serving cell where failure occurred, the Physical Cell Identity (PCI) of this cell, and the shortMAC-I calculated using the Identity (ID) of the re-establishment cell.

The procedure for a successful RRC connection re-establishment is shown in figure 2 and for an un-successful RRC connection re-establishment in figure 3. Further, an example of too late HO (see below) followed by a successful RRC connection re-establishment is shown in figure 4 and too late HO followed by an un-successful RRC connection re-establishment is shown in figure 5.

The hard HO in the Universal Mobile Telecommunications System (UMTS) is very similar in many respects to the above description - i.e. also being UE assisted but network controlled, which means that the UE is configured to send triggered measurement reports but the network decides when to execute the HO; exploits preparation (using Radio Link Setup procedure); is "backward" HO, which means that the source cell sends the HO command to the UE and the UE replies to the target cell; and is completed by inter-node signalling.

Furthermore, RLF is described in specifications 3GPP TS36.300 and 3GPP TS36.331. One form of RLF is driven by out-of-sync detection by Layer 1. A radio problem detection procedure is started when a UE receives a certain number of consecutive "out-of-sync" indications from lower layers. The number of consecutive indications is specified by the threshold *N310.* When this happens, the UE starts a timer *T310.* In case the UE receives a certain (*N311*) consecutive "in-sync" indications from lower layers while *T310* is running, the UE shall stop the timer and return to normal operation. If *T310* expires then RLF is recognised to have occurred ("declared") by the UE.

Following the declaration of a RLF, the UE attempts cell selection. If the UE manages to find a cell to connect to within the cell selection phase, the UE will attempt to re-establish RRC to this cell. If, on the other hand, the UE does not find a cell within the cell selection phase (*T311*)*,* the UE goes back to idle mode and may start looking for cells on other RATs, examples of which are LTE, UMTS, WiMaX and GSM EDGE Radio Access Network (GERAN).

RLF can also be declared by the Radio Link Control (RLC) layer of the UE when a maximum number of transmissions have been reached for transmission of an uplink RRC signalling packet, but the packet has still not been delivered successfully. Additionally, if the random access during the HO fails (*T304* timeout) the UE behaves as if a RLF had occurred. In the present discourse the term RLF relates to any of the above mentioned events.

Moreover, a RLF report was introduced in 3GPP Rel-9 to enable an eNB receiving a RLF indication message to distinguish between Mobility Robustness Optimisation (MRO) related problems and coverage problems. This was done by including a set of neighbour cell measurements indicating the signal strength at the time of failure. With the help of this, the eNB is able to see if there is an alternative neighbour cell that might have been used, or if there is no neighbour detected in the case of a coverage hole.

The RLF report carries information about:
- Serving cell RSRP, and optionally RSRQ;
- Neighbours cell RSRP/RSRQ; and
- May also indicate the strength of detected inter-RAT neighbour cells.

In Rel-9, if a RLF during a handover is followed by a successful RRC Re-establishment, it is possible to include a RLF Report in a *RLF INDICATION* message that is sent from a eNB where re-establishment takes place to a eNB that was serving the UE at the point of RLF. The capability of the UE to provide the RLF Report is indicated by a flag in the *RCConnectionReestablishmentComplete* message. The RLF Report is then provided to the eNB where re-establishment took place using the UE Information procedure.

Furthermore, in 3GPP there has been considerable study into Self-Organising Networks (SON) for LTE. One part of this is the Handover Parameter Optimisation also known as the above mentioned MRO which is aiming at optimising mobility parameters. It has not been specified which HO parameters shall be optimised, but examples include the HO hysteresis (also called offset) and the Time to Trigger (TTT) parameters. The aims of the optimisation are to reduce HO failures whilst at the same time not having more HOs than are necessary. The MRO functionality is distributed in the Evolved-UTRAN (E-UTRAN), i.e. every eNB has its own MRO optimisation function. To assist optimisation, signalling has also been defined between eNBs to help identify HO failure events.

The following is the text describing the use-case of Handover Parameter Optimisation also known as MRO in section 22.5 of specification 3GPP TS36.300, 9.2.0:
*One of the functions of Mobility Robustness Optimization [MRO] is to detect RLFs that occur due to Too Early or Too Late Handovers, or Handover to Wrong Cell. This detection mechanism is carried out through the following procedures:*
   - *[Too Late HO] If the UE attempts to re-establish the radio link at eNB B after a RLF at eNB A then eNB B may report this RLF event to eNB A by means of the RLF Indication Procedure.*
   - *[Too Early HO] eNB B may send a HANDOVER REPORT message indicating a Too Early HO event to eNB A when eNB B receives an RLF Indication from eNB A and if eNB B has sent the UE Context Release message to eNB A related to the completion of an incoming HO for the same UE within the last Tstore_UE_cntxt seconds.*
   - *[HO to Wrong Cell] eNB B may send a HANOVER REPORT message indicating a HO To Wrong Cell event to eNB A when eNB B receives an RLF Indication from eNB C, and if eNB B has sent the UE Context Release message to eNB A related to the completion of an incoming HO for the same UE within the last Tstore_UE_cntxt seconds. The indication may also be sent if eNB B and eNB C are the same and the RLF reports is internal to this eNB.*
*The detection of the above events is enabled by the RLF Indication and Hanover Report procedures.*
*The RLF Indication procedure may be initiated after a UE attempts to re-establish the radio link at eNB B after a RLF at eNB A. The RLF INDICATION message send from eNB B to eNB A shall contain the following informations elements:*
   - *Failure Cell ID: PCI of the cell in which the RLF occurred;*
   - *Reestablishment Cell ID: ECGI of the cell where RL re-establishment attempt is made;*
   - *C-RNTI: C-RNTI of the UE in the cell where RLF occurred.*
   - *shortMAC-I (optionally): the 16 least significant bits of the MAC-I calculated using the security configuration of the source cell and the re-establishment cell identity.*
   *eNB B may initiate RLF Indication towards multiple eNBs if they control cells which use the PCI signalled by the UE during the re-establishment procedure. The eNB A selects the UE context that matches the received Failure cell PCI and C-RNTI, and, if available, uses the shortMAC-I to conform this identification, by calculating the shortMAC-I and comparing it to the received IE.*
*The Handover Report procedure is used in the case of recently completed handovers, when an RLF occurs in the target cell (in eNB B) shortly after it sent the UE Context Release message to the source eNB A. The HANOVER REPORT message contains the following informations:*
   - *Type of detected handover problems (Too Early HO, HO to Wrong Cell)*
   - *ECGI of source and target cells in the handover*
   - *ECGI of the re-establishment cell (in the case of HO to Wrong Cell)*
   - *Handover cause (signalled by the source during handover preparation)*

A problem facing the MRO algorithm is how to distinguish between a failure from a coverage hole and a too late HO failure because of inappropriate HO parameters. A UE may suffer RLF when it enters a coverage hole that lies between the coverage of one cell and another cell. Here, lack of coverage implies that the UE cannot detect any cells, or if it can, the signalling radio bearer performance is not good enough to deliver messages to or from the UE. RLF may occur with or without an attempt to perform a HO between the two cells. If the coverage hole is "small" (this depends on some timer settings and UE speed) then the UE may attempt RRC re-establishment in the second cell and if the re-establishment request message is received correctly an X2 message, such as a RLF indication message, will be sent between the two cells (assuming they belong to separate eNBs). The MRO algorithm may react to such a failure report by reducing the offset by increasing the Cell Individual Offset (CIO) - this is the normal response to too late HOs. However, depending upon the size of the hole and the UE speed it may not be possible to eliminate the RLF via such an offset.

Further, according to specification 3GPP TS32.522, the MRO is expected to: a) meet a specified HO failure rate target, and b) minimize the number of HO events whilst meeting this target value. Studies have though shown that HO failure rate reduction and HO count reduction are contradictory requirements; if the failure rate is reduced the HO count increases, and vice versa.

Moreover, the RLF report was introduced in 3GPP Rel-9 to enable an eNB receiving the RLF indication (carrying the RLF report) to distinguish between Mobility Robustness Optimisation (MRO) related problems and coverage problems. This was done by including a set of neighbour cell measurements indicating the signal strength at the time of failure. With the help of this, the eNB is able to see if there is an alternative neighbour cell that might have been used, or if there is no neighbour detected in the case of a coverage hole.

The RLF report carries information about:
- Serving cell RSRP, and optionally RSRQ;
- Neighbours cell RSRP/RSRQ; and
- May also indicate the strength of detected inter-RAT neighbour cells.

In Rel-9, when a RLF during a HO is followed by a successful RRC Re-establishment, it is possible to include a RLF Report in a *RLF INDICATION* message that is sent from an eNB where re-establishment takes place to a eNB that was serving the UE at the point of RLF. The capability of the UE to provide the RLF Report is indicated by a flag in the *RCConnectionReestablishmentComplete* message. The RLF Report is then provided to the eNB where re-establishment took place using the UE Information procedure. The Rel-9 solution is only able to deliver the RLF report to the original source cell if the re-establishment is successful.

A prior art solution for providing a RLF report after a failed re-establishment can be summarised as:
- A RLF indication is generated when a UE attempts RRC re-establishment (it may be sent as soon as the *RRCConnectionRequest* is received and the eNB notes that it does not hold a context for the UE)- this is a primary indication.
- When the UE then attempts RRC establishment from idle mode it indicates it has a RLF Report available.
- The eNB, where the UE connects, extracts the report from the UE and sends a secondary RLF indication to the cell where the UE was previously attached (the source cell). The UE provides additional information together with radio measurements in the RLF Report such as the CRNTI, PCI and short MAC-I; these allow the recipient to determine where to send the secondary RLF indication to, and additionally they allow the recipient of the secondary RLF indication to tally this with the original primary RLF indication (recognizing that they belong to the same failure event).

The prior art solution above involves a secondary RLF indication message which is sent following the UE establishment from idle mode. This presents implementation difficulties for the eNB that is the recipient of these RLF indications:
- The eNB that receives a primary indication does not know if there will be a secondary indication,
   ∘ This will only be sent if the UE has a RLF report to offer and the cell where it performs establishment decides to extract the report and send a RLF indication
   ∘ The eNB must therefore keep the primary RLF indication and wait to see if a secondary RLF indication arrives; it is difficult to set a value for this waiting time. Whilst waiting no action by MRO is possible since the action is dependent upon the content of the (possible) RLF Report
- It is possible that the eNB receives the secondary RLF indication before the primary RLF indication, since they may be sent from different eNBs over different communication links (e.g. X2 links). This type of scenario needs to be managed by the communication system.

The document "Ue RLF report for Mobility Robustness Optimisation", Huawei, 3GPP TSG-RAN WG3, discloses the sending of a UE information response with RLF report. There is therefore a need for an improved method which mitigates and/or solves the disadvantages with prior art solutions.

### Summary of the Invention

The object of the present invention is to provide a method which mitigates and/or solves the disadvantages of prior art solutions. Another object of the invention is to provide a method which reduces un-necessary signalling and is easy to implement in existing communication system. A yet another object of the invention is to provide an alternative method for providing information in a cellular wireless communication system.

According to one aspect of the invention, the objects are achieved with a method for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, comprising the steps of:
- detecting a radio link failure (RLF) for said mobile station while connected to a first cell;
- requesting a radio resource control (RRC) re-establishment for said mobile station in a second cell after said radio link failure (RLF); and
- providing a single radio link failure (RLF) indication message to said first cell,
wherein said single radio link failure (RLF) indication message is generated by a cell in which a radio resource control (RRC) establishment takes place and said re-establishment is unsuccessful, wherein said single radio link failure (RLF) indication message comprises a radio link failure (RLF) report produced by said mobile station, wherein said second cell indicates to said mobile station whether said mobile station shall attempt to deliver said radio link failure (RLF) report at radio resource control (RRC) establishment.

Embodiments of the method in a cellular wireless communication system above are disclosed in the dependent claims 2-23.

According to another aspect of the invention, the objects are also achieved with a method in a mobile station for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, comprising the steps of:
- detecting a radio link failure (RLF) while being connected to a first cell;
- requesting a radio resource control (RRC) re-establishment in a second cell after said radio link failure (RLF);
- indicating whether information comprising a radio link failure (RLF) report is available or not to said second cell; and
- providing said radio link failure (RLF) report to a cell where a radio resource control (RRC) establishment is performed after receiving a rejection of said radio resource control (RRC) re-establishment request, wherein said second cell indicates to said mobile station whether said mobile station shall attempt to deliver said radio link failure (RLF) report at radio resource control (RRC) establishment.

According to yet another aspect of the invention, the objects are also achieved with a method for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, comprising the steps of:
- receiving by a second cell a radio resource control (RRC) re-establishment request from a mobile station;
- registering by a first cell a radio link failure (RLF) for said mobile station while the mobile station is connected to the first cell;
- rejecting said radio resource control (RRC) re-establishment request the second cell;
- determining by the second cell whether a radio link failure (RLF) indication message is generated by a cell in which a radio resource control (RRC) establishment is performed by said mobile station, wherein the determination is performed via communication links linking the second cell with the cell; and
- providing a single radio link failure (RLF) indication message by the second cell to said first cell if said cell in which said radio resource control (RRC) establishment is performed does not generate said radio link failure (RLF) indication message.

The method in a mobile station and the method in the base station may be modified according to different embodiments of the method in the cellular wireless communication system.

The invention also relates to a computer program and a computer program product when run in a computer causes the computer to execute the method in a mobile station and the method in a base station described above.

According to yet another aspect of the invention, the objects are also achieved with a mobile station device for providing information in a cellular wireless communication system, wherein each cell in said cellular wireless communication system is arranged to be served by a base station, and said cellular wireless communication system employs a procedure in which a mobile station suffering from a radio link failure (RLF) while being connected to a cell may attempt to re-establish a connection in another cell, being configured to:
- detect a radio link failure (RLF) while being connected to a first cell;
- request a radio resource control (RRC) re-establishment in a second cell after said radio link failure (RLF) in the first cell;
- indicate whether information comprising a radio link failure (RLF) report is available or not to said second cell; and
- providing said radio link failure (RLF) report to a cell where a radio resource control (RRC) establishment is performed after receiving a rejection of said radio resource control (RRC) re-establishment request, wherein said second cell indicates to said mobile station whether said mobile station shall attempt to deliver said radio link failure (RLF) report at radio resource control (RRC) establishment.

According to yet another aspect of the invention, the objects are also achieved with a system of base station devices for providing information in a cellular wireless communication system, wherein each cell in said cellular wireless communication system is arranged to be served by a base station, and said cellular wireless communication system employs a procedure in which a mobile station suffering from a radio link failure (RLF) while being connected to a cell may attempt to re-establish a connection in another cell, wherein
- a second base station is configured to receive a radio resource control (RRC) re-establishment request from a mobile station;
- a first base station is configured to register a radio link failure (RLF) for said mobile station while connected to a first cell;
- the second base station is configured to reject said radio resource control (RRC) re-establishment request;
- the second base station is configured to determine whether a radio link failure (RLF) indication message is generated by a cell in which a radio resource control (RRC) establishment is performed by said mobile station, wherein the determination is performed via communication links linking the second base station with the first base station; and
- the second base station is configured to provide a single radio link failure (RLF) indication message to said first cell if said cell in which said radio resource control (RRC) establishment is performed does not generate said radio link failure (RLF) indication message.

The present invention enables delivery of a single RLF indication carrying a RLF report (if available at the UE) to the source cell when the RRC re-establishment following a RLF is unsuccessful and the UE establishes an RRC connection from idle mode. Delivery is also possible if the UE does not generate any RRC re-establishment signalling because cell selection after RLF fails. The method addresses different eNB capabilities, and cases when source cell, re-establishment cell and establishment cell are different cells.

Thereby, signalling may be reduced in the system compared to prior art solutions. Further, complexity of receivers, such as base stations, receiving the information may be reduced. Further, the impact on some of the current communication systems is minimized.

Other advantages and applications of the present invention will be apparent from the following disclosure.

### Brief Description of the Drawings

The appended drawings are intended to clarify and explain different embodiments of the present invention in which:
- Figure 1 shows a typical cell scenario with cell measurement;
- Figure 2 shows a successful RRC connection re-establishment;

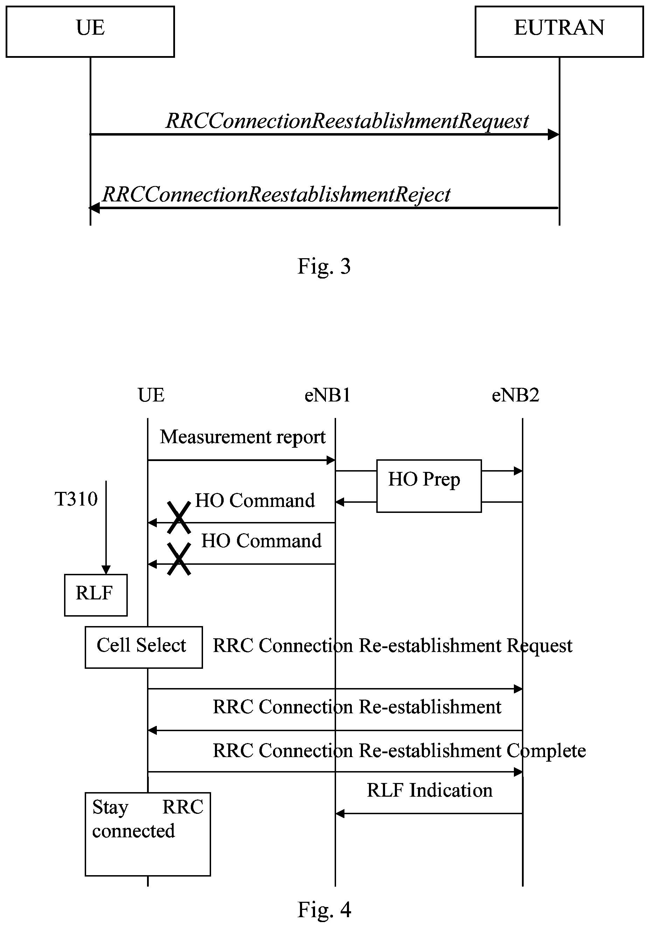

- Figure 3 shows a failure RRC connection re-establishment;
- Figure 4 shows an example of a too late HO failure followed by a successful RRC re-establishment; and

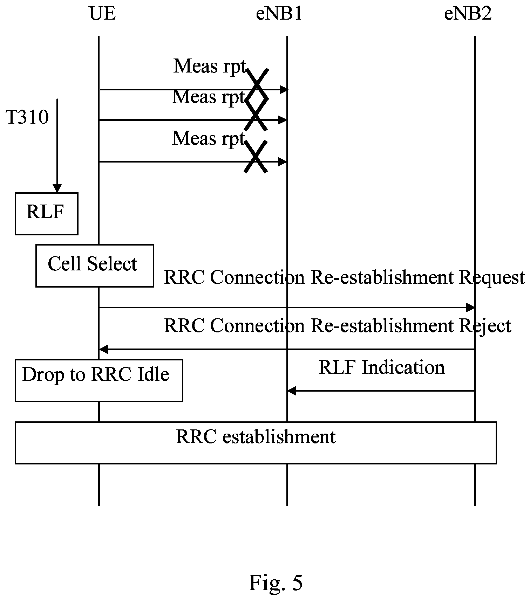

- Figure 5 shows an example of a too late HO failure followed by an unsuccessful RRC re-establishment.

### Detailed Description of Embodiments of the Invention

For the above stated reasons, the present invention relates to a method for providing information in a cellular wireless communication system, in which each cell is served by at least one Base Station (BS) serving a particular cell. However, a BS may serve more than one cell.

Further, the system employs a procedure in which a MS suffering from a RLF while being connected to a cell may attempt to re-establish a connection in another cell. The RLF may result from a HO failure for a MS. The method comprises the steps of: detecting a RLF for a MS while connected to a first cell; requesting a RRC re-establishment for the MS in a second cell after the RLF; and providing a single RLF indication message to the first cell.

According to an embodiment of the invention, the RLF report is produced by the MS, and may according to another embodiment comprise a cell Identity (ID) of an establishment cell and a value representing a time period from the RRC re-establishment request to a RRC establishment.

Further, according to yet another embodiment of the invention, the RRC re-establishment request comprises a first flag indicating whether the RLF report is available or not. The first flag is preferably contained in a *RRCConnectionReestablishmentRequest* message. Also, a RLF indication message is generated by a cell in which a RRC establishment subsequently takes place if the first flag indicates that the RLF report is available and the re-establishment request is unsuccessful. The cell where re-establishment is attempted, lacking a UE context such that the re-establishment must be rejected, can determine that when the flag is set (to true) a neighbouring base station may extract a RLF report from a MS after RRC establishment and send it in a RLF indication to the first cell. If the flag is set to false, the cell where re-establishment is attempted can immediately generate the RLF indication.

According to yet another embodiment of the invention, the second cell indicates to the MS whether the MS shall attempt to deliver the RLF report at RRC establishment. The indication is preferably contained in a *RRCConnectionReestablishmentReject* message.

According to yet another embodiment of the invention, the MS sets a second flag indicating whether the RLF report is available during a RRC establishment if the RRC establishment is performed in the same cell as a cell in which the RRC re-establishment was requested. The second flag is preferably contained in a *RRCConnectionRequest* or a *RRCConnectionSetupComplete* message. As a result of this behaviour, the cell that rejects the RRC re-establishment knows that no RLF report will be delivered at RRC establishment if the UE establishes to a different cell, and is able to send a RLF indication immediately or wait some time to see if the UE does perform RRC establishment at the same cell (this may allow a RLF indication with RLF report to be sent).

The step of providing the RLF report involves, according to an embodiment of the invention: transmitting the RLF report to a first BS serving the first cell. Hence, if the RRC establishment is requested in the second cell, then the RLF report is transmitted by a second BS serving the second cell. However, if the RRC establishment is requested in another cell, i.e. in a third cell, then the RLF report is transmitted by a third BS serving the third cell to the first cell via one or more other BSs.

In some circumstances, as discussed above, a RLF report cannot be delivered following RRC establishment by the MS, and a RLF indication is then generated by the second cell where re-establishment is attempted.

According to yet another embodiment of the invention, the RLF report is contained in the RLF indication message or in a HO report message and may be transmitted via one or more X2 interfaces or any other suitable interface between different network nodes (e.g. BSs) in the system.

If a cell receives the RLF report in the RLF indication message, then the first BS serving the first cell may copy the RLF report into the HO report message. The HO report is employed in "HO too early" and "HO to wrong cell" when failure occurs immediately after a successful HO. In these cases, the first BS sends the HO report to the cell to which the UE was connected prior to the first cell.

In another embodiment of the invention, the RLF indication message is generated if a cell to which the MS reconnects after the RLF is the same cell as a cell in which the radio resource control (RRC) re-establishment was requested. In a yet another embodiment a radio resource allocation grant and a time offset value *T_{offset}* is provided to the MS by the cell in which the RRC re-establishment was requested. The radio resource allocation grant is used after the time offset value *T_{offset}* by the MS to send a RRC connection request message.

In yet further embodiments of the invention the RLF indication message is generated after waiting a second time period *T_{Wait}* in a cell in which RRC re-establishment was requested, wherein:
- The generation of the RLF indication message or the HO report message is cancelled if a cancellation message is received from a cell to which the MS reconnects after the RLF; or
- The RLF indication message is triggered if a RLF report from a successful RRC establishment is received from a cell in where the MS performs RRC establishment.

In yet another embodiment, the RLF indication message is generated if a cell to which the MS performs cell establishment after the RLF belongs to the same BS as a cell in which the RRC re-establishment was requested. The MS can judge whether this condition is true according to signalling from the cell where re-establishment is attempted, preferably in the RRCConnectionReestablishmentReject message.

In yet another embodiment, the cell where RRC establishment takes place does not generate a RLF indication message if the first time period *T* in the RLF report exceeds the second time period *T_{Wait}*.

The present invention enables delivery of a single RLF indication message carrying a RLF report - if available at the UE - to the source cell when the RRC re-establishment following a RLF is unsuccessful and the UE establishes an RRC connection from idle. Delivery is also possible if the UE does not generate any RRC re-establishment signalling because cell selection after RLF fails. The present method addresses different eNB capabilities, and cases when source eNB, re-establishment eNB and establishment eNB are all different. The present invention includes mechanisms to avoid generation of multiple RLF indications following a RRC re-establishment rejection by an eNB

There arc different failure cases/modes for a UE in connection with a RLF such as that after a RLF:
- (I) - The UE is unable to do cell selection (*T311* expiry) and drops to idle.
- (II) - The UE performs cell selection but is unable to deliver the *RRCConnectionReestablishmentRequest,* and after *T301* expiry the UE drops to idle.
- (III) - The UE performs cell selection, delivers the *RRCConnectionReestablishmentRequest,* but then receives the *RRCConnectionReestablishmentReject,* and drops to idle.

Furthermore, a UE may have different capabilities so that the UE may or may not be able to provide a RLF report after connection from idle state. The eNB to which the UE connects from idle state may or may not support RLF Report extraction and sending in a RLF indication message.

Moreover, if an original serving cell is denoted cell *S*, a cell where re-establishment is attempted is denoted cell *R* (n/a to the case above when the UE is unable to do cell selection, *T311* expiry, and drops to idle), and a cell where the UE connects from idle state is denoted cell *I*, then in general cell *S ≠* cell *R*, cell *S ≠* cell *I*, and cell *R* ≠ cell *I.*

In the exemplary embodiments below different modes of the invention in a LTE system are captured and discussed. However, it should be understood that the present invention is not limited to the embodiments described this disclosure, but also relates to and incorporates all embodiments within the scope of the appended independent claims.

Some aspects of the UE behaviour are common to all modes and embodiments described below. The UE is able to store details of a RLF event, such as signal strength measurements on serving and neighbour cells prior to failure, after the UE has transitioned to RRC idle state following a RRC re-establishment failure. These details (information) may be packed into a RLF report message which the UE can deliver to the cell to which it next performs RRC establishment. Additional information elements may be provided within the RLF report, which may differ between different embodiments as detailed below.

### Mode (i) of the present invention

A solution which places no restrictions on the relationship between *cell R* and cell *I* is first described, hence they can be different cells, and/or they can belong to different eNBs. It addresses failure cases (I), (II) and (III) above, and different UE and eNB capabilities. In this mode the UE provides the identity of the RRC re-establishment cell (the cell where re-establishment was attempted) and the identity of the cell where RLF took place in the RLF report the UE provides after RRC establishment. The latter identity is required to allow the recipient to route a RLF indication to the correct eNB (i.e. the eNB serving the failure cell). The latter identity is included in the RLF indication (within or outside the RLF report information element) to indicate the failure cell. The former identity may be signalled similarly and can be useful when analysing the failure since the failure sequence is then known (failure cell - re-establishment cell - establishment cell).

### Exemplary Embodiment A

The UE includes a flag to indicate the availability of a RLF Report that may be sent after a transition to RRC Idle in the *RRCConnectionReestablishmentRequest;* the eNB serving *cell R* determines to generate a RLF indication immediately or to do nothing according to the presence and setting of the flag, together with knowledge of the support for RLF Indication following RRC establishment in other eNBs. The eNB serving cell *I* where establishment takes place shall always generate a RLF indication message (with RLF report) if the UE indicates that it has a RLF report to send.

The flag discussed above, indicating the availability of a RLF report that may be sent after a transition to RRC idle state in the *RRCConnectionReestablishmentRequest,* therefore indicates that the UE has information available, but may also indicate that the UE is capable of sending this information after transition to idle.

In this exemplary embodiment, it is stated that the eNB shall behave differently if the other eNBs in the network do not support the RLF indication following RRC establishment. This can either be achieved by configuration (from OAM). Another solution is to let each eNB discover the capability of the neighbour eNB by including this capability in the X2 signalling between the eNBs.

An important aspect with this embodiment is that a UE includes a flag to indicate the availability of a RLF report that may be sent after a transition to RRC idle state in the *RRCConnectionReestablishmentRequest.* In 3GPP this could be added as an optional information element in Rel-10 (or later releases) - it is optional because some Rel-10 UEs may not support this feature. Assuming that the flag is present, the behaviour of cell *R* then exploits the following logic after it has determined that the re-establishment shall be rejected:
- If the flag is set to false
   ∘ eNB generates an RLF indication immediately, because there is no possibility that a RLF indication could be generated after the UE does RRC establishment.
- Else (the flag is true)
   ∘ If eNBs in the network do not support the RLF indication following RRC establishment
      ▪ eNB generates RLF indication immediately, because there is no possibility that a RLF indication could be generated after the UE does RRC establishment.
   ∘ Else
      ▪ {eNB does nothing (there is a possibility that an eNB could generate a RLF Indication so to avoid two RLF indications for the same event a RLF Indication cannot be generated at this point in time)}.

If the flag is not present, the eNB generates a RLF indication message since there is no possibility that a RLF indication could be generated after the UE does RRC establishment.

Cell *I* behaviour: if the UE that performs RRC establishment indicates that it has a RLF report
- Extract this RFL report from the UE.
- [Generate a RLF indication message carrying the RLF report]

Note: for failure case (I), the UE does not attempt re-establishment, this behaviour for cell *I* is also correct.

Further, an optimisation of the exemplary embodiment A is also to include a flag in the *RRCConnectionReestablishmentReject* message to indicate whether the UE is expected to try sending the RLF-report again in RRC establishment or not. In case the eNB has judged that it is unlikely that the UE will successfully transmit the RLF report in RRC establishment, since neighbour eNBs are not supporting the reporting at RRC establishment, this solution gives the eNB the possibility to also tell the UE not to send the RLF report again, thereby eliminating the risk for duplicate RLF indications being generated in the system.

### Exemplary Embodiment B

According to the exemplary embodiment A above, where if cell *R* is not certain whether other cell *I* will support the generation of a RLF indication after RRC establishment it may wait for a defined time before generating a RLF Indication. The generation is cancelled if cell *I* signals to cell *R* that it has generated a RLF Indication. This requires that the UE tells cell *I* the time since the re-establishment attempt in cell *R.*

The actions of cell *R* in {...} and cell *I* in [...] above may be modified as follows in another embodiment.

### Cell R behaviour:

- Cell *R* starts a second timer *T_{Wait}* (value *max_wait_time*) and keeps a record of the re-establishment attempt (time, message contents).
- IF *T_{Wait}* expires:
   ∘ Cell *R* sends a RLF indication (with no RLF report but with an indication of the time since Re-establishment attempt).
- IF cell *R* receives a message from cell *I* (internally if cell *R* and cell *I* are the same cell or belong to the same eNB, or over interface X2 if they belong to separate eNBs) indicating that it has sent a RLF indication message (including a RLF report) for a logged event that matches an existing record held by *R*:
   ∘ Cell *R* stops *T_{Wait}* (and discards the record).

Value *max_wait_time* controls how long the time from re-establishment attempt to establishment is permitted so that a RLF indication with a RLF report can be generated.

### Cell I behaviour:

- If the UE that performs RRC establishment indicates that it has a RLF report.
- Extract this report from the UE
   ∘ If the UE indicates it attempted Re-establishment (failure cases (II) or (III)).
      ∘ If the UE reported time since re-establishment ≤ *max_wait_time*
         ▪ Generate a RLF indication message - including a RLF report.
         ▪ Send a message to cell R indicating that a RLF [report?] has been sent (and the contents so that a match with a held record can be made).
      ∘ Else
         ▪ do nothing.
   ∘ Else
      ▪ Generate a RLF indication message - including a RLF report.

In a similar way, it would also be possible for a solution where cell *I* always sends the contents of the RLF indication (with RLF report) in a new message (RL indication EST, which basically is an RLF indication message including an RLF report) to *cell R* in case a re-establishment attempt has been made (failure cases (II) or (III) above). Cell *R* can then decide whether to forward the report to cell *S* or not.

### Cell R behaviour:

- *Cell R* starts a second timer *T_{Wait}* (value *max_wait_time)* and keeps a record of the re-establishment attempt (time, message contents).
- IF *T_{Wait}* expires:
   ∘ Cell *R* sends a RLF indication (with no RLF report but with an indication of the time since Re-establishment attempt).
- IF cell *R* receives the RLF indication EST (including a RLF report) from cell *I* (internally if *cell R* and cell *I* are the same cell or belong to the same eNB, or over interface X2 if they belong to separate eNBs) for a logged event that matches an existing record held by *R*:
   ∘ Cell *R* stops *T_{Wait}* and forwards the RLF indication with the RLF report to cell *S.*

Value *max_wait_time* controls how long the time from re-establishment attempt to establishment is permitted so that a RLF indication with a RLF report can be generated.

### Cell I behaviour:

- If the UE that performs RRC establishment indicates that it has a RLF report.
   • Extract this report from the UE
      ∘ If the UE indicates it attempted Re-establishment (failure cases (II) or (III) above).
         ∘ If the UE reported time since re-establishment ≤ *max_wait_time*
            ▪ Compile information needed for an RL indication EST message.
            ▪ Send RL indication EST message to cell *R*
         ∘ Else
            ▪ do nothing.
      ∘ Else
         ▪ Generate a RLF indication message - including a RLF report and send to cell *S*.

### Mode (ii) of the present invention

According to this mode, the RLF indication generation is only allowed following a RRC establishment if the UE connects to the *same cell* as where re-establishment was attempted, i.e. cell *I* = cell R. The re-establishment in the same cell as re-establishment was attempted is a very likely scenario since during the re-establishment the UE already chose the best cell, cell R, and this will be the best cell for RRC establishment unless the UE has moved significantly, or there are two cells of approximately equal signal strength and uncertainty in the UE measurements can favour one or the other. By restricting the solution the behaviour of the nodes can be simplified.

In this mode the UE provides the identity of the failure cell, for the same reasons as in mode (i) above. The embodiments in this mode include mechanisms, described below, to identify that re-establishment cell is equal to establishment cell.

### Exemplary Embodiment C

This embodiment restricts to only allow generation of RLF indication following a RRC establishment if cell *I* = cell *R.* Cell *I* recognizes this event by comparing contents of RLF report, sent to cell *I* after establishment there, with previously recorded re-establishment requests.

### Cell R behaviour:

- Cell *R* receives a RRC re-establishment request and determines to reject it.
- Cell *R* starts a second timer *T_{Wait}* (value equals *max_wait_time)* and keeps a record of the re-establishment attempt (time, message contents) - IF *T_{Wait}* expires: Send a RLF indication (with no RLF report but with some indication of time since Re-establishment attempt).
- *T_{Wait}* may be stopped when cell *I* = cell *R* (see below).

### Cell I behaviour:

- If the UE that performs RRC establishment indicates that it has a RLF report
   - Extract this report from the UE.
   - IF the fields in the report (CRNTI, shortMAC-I and PCI, which identifies the failure cell) are the same as those in a recorded RRC re-establishment request
      ∘ *This means cell I*= *cell R.*
      ∘ Send a RLF indication with a RLF report.
      ∘ Stop the second timer *T_{Wait}* and erase the recorded RRC re-establishment request details.
   - Else
      ∘ Discard, do nothing.

### Exemplary Embodiment D

According to embodiment C above, where the UE only indicates the ability to send RLF report in establishment in cell *I* if cell *I* = cell *R.* Thereby, the condition is recognized.

Cell *R* behaviour is unchanged from embodiment C described above.

The UE behaviour is modified so that it only indicates the availability of a RLF report on RRC establishment if cell *I* = cell *R.* It does this by comparing the Physical Cell Identity (PCI) values (a more advanced solution would compare the global cell id values (ECGI)).

### Cell I behaviour:

- If the UE that performs RRC establishment indicates that it has a RLF report
   - *This means cell I* = *cell R.*
   - Extract this report from the UE.
   - Send a RLF indication message with a RLF report.
   - Stop the second timer *T_{Wait}* and erase the recorded RRC re-establishment request details (cell *I* must compare the CRNTI and PCI in the RLF report with those values recorded at the RRC re-establishment attempt to determine which timer/record is applicable). Therefore, the CRNTI and PCI can be used to find out if a timer is started. In that case, the timer is stopped and the entry is erased.
- Else
   - Discard, do nothing.

This embodiment may be extended to cover failure cases (I) and (II) by allowing the UE to indicate it has a report in these circumstances. Cell *I* would then be unable to stop a timer but this would be OK.

### Exemplary Embodiment E

This embodiment is according to embodiment C above, but also including recognition by communicating a special resource grant to the UE in the re-establishment reject message, and if the resources then carry the *RRCConnectionRequest* it is known that the cell *I* = cell *R.*

### Cell R behaviour:

- Cell *R* receives a RRC rc-cstablishmcnt request and determines to reject it.
- Cell *R* provides a particular resource grant to the UE and a time offset for which it can be used in the *RRCConnectionReestablishmentReject.*
- Cell R decodes the transmission in the granted resource at the specified time.
- IF transmission is a *RRCConnectionRequest:*
   - Cell *R* recognizes that the UE has done establishment in the same cell (*I* = *R*).
   - Cell *R* can extract a RLF report, if available.
   - Cell *R* sends a RLF indication message (with a RLF report if extracted). ELSE
   - Cell *R* sends a RLF indication message (without a RLF report).

The UE behaviour is modified in this embodiment so that the UE can exploit the special granted resource for the establishment request message.

### Mode (iii) of the present invention

According to this mode of the invention, the RLF indication generation is only allowed following a RRC establishment if the UE connects to the same eNB (BS) as where re-establishment was attempted. This solution offers more coverage of possible outcomes than mode (ii) and exploits internal signalling within the common eNB of cell *I* and cell *R.* By restricting the solution, the behaviour of the nodes can be simplified. UE information elements to identify cells in this mode are the same as mode (i) above.

### Exemplary Embodiment F

An extension of embodiment D described above to allow cell *I* and cell *R* to share the same eNB. This embodiment is a variation of embodiment D above.

### Cell R behaviour:

- Cell *R* receives a RRC re-establishment request and determines to reject it.
- Cell *R* advertises the other cells of its eNB parent in the *RRCConnectionReestablishmentReject* (PCI values or ECGI).
- Cell *R* starts a second timer *T_{Wait}* (value equals *max_wait_time*) and keeps a record of the re-establishment attempt (time, message contents).
- IF *T_{Wait}* expires: Send a RLF indication message (with no RLF report but with some indication of time since Re-establishment attempt); *T_{Wait}* may be stopped when the eNB of cell *I* = eNB of cell *R* (see below).

The UE behaviour is modified so that it only indicates the availability of a RLF report on RRC establishment if eNB serving cell *I* = eNB serving *R* (this relies upon the signalling in the reject message, as discussed above).

### Cell I behaviour:

- If the UE that performs RRC establishment indicates that it has a RLF report
   - *This means eNB serving cell I*= *eNB serving cell R.*
   - Extract this RLF report from the UE.
   - Send a RLF indication message with the RLF report.
   - Stop the timer *T_{Wait}* and erase the recorded RRC re-establishment request in cell R.
- Else
   - Discard, do nothing.

This embodiment may be extended to cover failure cases (I) and (II) by allowing the UE to indicate it has a report in these circumstances. Cell *I* would then be unable to stop a timer but this would be OK.

It should be understood that the cellular wireless communication system may be any relevant cellular system, such as LTE, UMTS, CDMA2000, WiMaX and GERAN. Accordingly, the BS may be any of a eNB, NodeB and BTS; and the MS any of UE, MS and SS; or any relevant MS or BS having the corresponding functions.

The ability to send information comprising a RLF report, in a single RLF indication message, after a UE has passed to idle mode according to the invention greatly improves the ability of a MRO algorithm to identify failure events arising from e.g. coverage holes. The invention provides the means so that this can happen whenever possible (even when the UE has not attempted RRC re-establishment), whilst avoiding unnecessary complexity for the receiver of the message which would occur through duplicate messages for the same event. With this information a BS serving the first cell may tune one or more mobility parameters and/or provide one or more performance measurements. Further, signalling in the system may be reduced with the present invention.

The invention also relates to a method in a MS and a method in a BS.

The method in a MS comprises the steps of: detecting a RLF while being connected to a first cell; requesting a RRC re-establishment in a second cell after the RLF; indicating whether information comprising a RLF report is available or not to the second cell; and providing the RLF report to a cell where a RRC establishment is performed after receiving a rejection of the RRC re-establishment request.

The method in a BS comprises the steps of: receiving a RRC re-establishment request from a mobile station; registering a RLF for the mobile station while connected to a first cell; rejecting the RRC re-establishment request; determining whether a RLF indication message is generated by a cell in which a RRC establishment is performed by the mobile station; and providing a single RLF indication message to the first cell if the cell in which the RRC establishment is performed does not generate the RLF indication message.

Furthermore, as understood by the person skilled in the art, a method in a MS and a method in a BS according to the present invention may be implemented in a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, the invention further relates to a MS device and a BS device arranged accordingly.

The MS device is being configured to: detect a RLF while being connected to a first cell; request a RRC re-establishment in a second cell after the RLF in a second cell; indicate whether information comprising a RLF report is available or not to the second cell; and providing the RLF report to a cell where a RRC establishment is performed after receiving a rejection of the RRC re-establishment request.

The BS device is being configured to: receive a RRC re-establishment request from a mobile station; register a RLF for the mobile station while connected to a first cell; reject the RRC re-establishment request; determine whether a RLF indication message is generated by a cell in which a RRC establishment is performed by the mobile station; and provide a single RLF indication message to the first cell.

## Claims

1. Method for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, **comprising** the steps of:
- detecting a radio link failure (RLF) for said mobile station while connected to a first cell;
- requesting a radio resource control (RRC) re-establishment for said mobile station in a second cell after said radio link failure (RLF); and
- providing a single radio link failure (RLF) indication message to said first cell, **characterised in that** said single radio link failure (RLF) indication message is generated by a cell in which a radio resource control (RRC) establishment takes place and said re-establishment is unsuccessful, wherein said single radio link failure (RLF) indication message comprises a radio link failure (RLF) report produced by said mobile station, wherein said second cell indicates to said mobile station whether said mobile station shall attempt to deliver said radio link failure (RLF) report at radio resource control (RRC) establishment.

2. Method according to claim 1, wherein said radio link failure (RLF) report comprises a cell identity (ID) of a re-establishment cell, and a value representing a first time period T from said radio resource control (RRC) re-establishment request to a radio resource control (RRC) establishment.

3. Method according to claim 1, wherein said radio resource control (RRC) re-establishment request comprises a first flag indicating whether said radio link failure (RLF) report is available or not.

4. Method according to claim 3, wherein said first flag is contained in a RRCConnectionReestablishmentRequest message.

5. Method according to claim 1, wherein said indication is represented by a third flag included in a RRCConnectionReestablishmentReject message.

6. Method according to claim 1, wherein said single radio link failure (RLF) indication message is generated if a cell in which said mobile station performs a radio resource control (RRC) establishment after said radio link failure (RLF) is the same cell as said second cell.

7. Method according to claim 6, wherein a radio resource allocation grant and a time offset value *T_{offset}* is provided to said mobile station by said second cell, said radio resource allocation grant being used after said time offset value *T_{Offset}* by said mobile station to send a radio resource control (RRC) connection request message.

8. Method according to claim 6, wherein said mobile station sets a second flag indicating whether said radio link failure (RLF) report is available during a radio resource control (RRC) establishment if said radio resource control (RRC) establishment is performed in said second cell.

9. Method according to claim 8, wherein said second flag is contained in a RRCConnectionRequest message or in a RRCConnectionSetupComplete message.

10. Method according to claim 1, wherein said step of providing said radio link failure (RLF) indication message involves:
- transmitting said single radio link failure (RLF) indication message to a first base station serving said first cell.

11. Method according to claim 10, wherein said single radio link failure (RLF) indication message is transmitted by a second base station serving said second cell.

12. Method according to claim 10, wherein said radio resource control (RRC) establishment is requested in a third cell, and said radio link failure (RLF) indication message is transmitted by a third base station serving said third cell, wherein said second and third cells are different cells.

13. Method according to any of claims 10-12, wherein said single radio link failure (RLF) indication message is transmitted over one or more X2 interfaces.

14. Method according to claim 13, wherein if said first cell receives said radio link failure (RLF) report in said radio link failure (RLF) indication message said radio link failure (RLF) report is copied into a handover report message for transmission to a fourth cell, said fourth cell being a cell to which said mobile station was connected before said first cell.

15. Method according to claim 1, wherein said radio link failure (RLF) indication message is generated after waiting a second time period *T_{Wait}* in said second cell.

16. Method according to claim 15, wherein said generation of said radio link failure (RLF) indication message is cancelled if a cancellation message is received from a cell in which said mobile station performs a radio resource control (RRC) establishment after said radio link failure (RLF).

17. Method according to claim 15, wherein said generation of said radio link failure (RLF) indication message is triggered if a radio link failure (RLF) report from a successful radio resource control (RRC) establishment is received from a cell in which said mobile station performs radio resource control (RRC) establishment after said radio link failure (RLF).

18. Method according to claim 2 and 15, wherein a base station serving a cell where a radio resource control (RRC) establishment takes place does not generate a radio link failure (RLF) indication message if said first time period T in said radio link failure (RLF) report exceeds said second time period *T_{Wait}.*

19. Method according to claim 1, wherein said single radio link failure (RLF) indication message is generated if a cell in which said mobile station performs a radio resource control (RRC) establishment after said radio link failure (RLF) belongs to the same base station as said second cell.

20. Method according to claim 19, wherein said mobile station is informed about cells belonging to same base stations.

21. Method according to claim 20, wherein said information about cells belonging to same base stations is provided in a RRCConnectionReestablishmentReject message.

22. Method according to claim 1, wherein a base station serving said first cell uses said single radio link failure (RLF) indication message for tuning one or more mobility parameters and/or for providing one or more performance measurements.

23. Method according to claim 1, wherein said cellular wireless communication system is any in the group comprising: LTE, UMTS, CDMA2000, WiMaX and GERAN; said base stations is any is any in the group comprising: eNB, NodeB and BTS; and said mobile station is any in the group comprising: UE, MS and SS.

24. Method in a mobile station for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, **comprising** the steps of:
- detecting a radio link failure (RLF) while being connected to a first cell;
- requesting a radio resource control (RRC) re-establishment in a second cell after said radio link failure (RLF);
- indicating whether information comprising a radio link failure (RLF) report is available or not to said second cell; **characterised by**
- providing said radio link failure (RLF) report to a cell where a radio resource control (RRC) establishment is performed after receiving a rejection of said radio resource control (RRC) re-establishment request, wherein said second cell indicates to said mobile station whether said mobile station shall attempt to deliver said radio link failure (RLF) report at radio resource control (RRC) establishment.

25. Method for providing information in a cellular wireless communication system, wherein each cell in said cellular wireless communication system is served by a base station, and said cellular wireless communication system employs a procedure in which a mobile station suffering from a radio link failure (RLF) while being connected to a cell may attempt to re-establish a connection in another cell, comprising the steps of:
- receiving by a second cell a radio resource control (RRC) re-establishment request from a mobile station, **characterised by**
- registering by a first cell a radio link failure (RLF) for said mobile station while the mobile station is connected to the first cell;
- rejecting said radio resource control (RRC) re-establishment request by the second cell;
- determining by the second cell whether a radio link failure (RLF) indication message is generated by a cell in which a radio resource control (RRC) establishment is performed by said mobile station, wherein the determination is performed via communication links linking the second cell with the cell; and
- providing a single radio link failure (RLF) indication message by the second cell to said first cell if said cell in which said radio resource control (RRC) establishment is performed does not generate said radio link failure (RLF) indication message.

26. Computer program, **characterised in** code means, which when run in a computer causes said computer to execute said method according to claim 25.

27. Computer program product comprising a computer readable medium and a computer program according to claim 26, wherein said computer program is included in the computer readable medium, and consist of one or more from the group: ROM (Read-Only Memory), PROM (Programmable ROM), EPROM (Erasable PROM), Flash memory, EEPROM (Electrically EPROM) and hard disk drive.

28. Mobile station device for providing information in a cellular wireless communication system, wherein each cell in said cellular wireless communication system is arranged to be served by a base station, and said cellular wireless communication system employs a procedure in which a mobile station suffering from a radio link failure (RLF) while being connected to a cell may attempt to re-establish a connection in another cell, **the mobile station device** being configured to:
- detect a radio link failure (RLF) while being connected to a first cell;
- request a radio resource control (RRC) re-establishment in a second cell after said radio link failure (RLF) in the first cell, **characterised by**
- indicate whether information comprising a radio link failure (RLF) report is available or not to said second cell; and
- providing said radio link failure (RLF) report to a cell where a radio resource control (RRC) establishment is performed after receiving a rejection of said radio resource control (RRC) re-establishment request, wherein said second cell indicates to said mobile station whether said mobile station shall attempt to deliver said radio link failure (RLF) report at radio resource control (RRC) establishment.

29. System of base station devices for providing information in a cellular wireless communication system, wherein each cell in said cellular wireless communication system is arranged to be served by a base station, and said cellular wireless communication system employs a procedure in which a mobile station suffering from a radio link failure (RLF) while being connected to a cell may attempt to re-establish a connection in another cell, , wherein - a second base station is configured to receive a radio resource control (RRC) re-establishment request from a mobile station, **characterised by**
- a first base station is configured to register a radio link failure (RLF) for said mobile station while connected to a first cell;
- the second base station is configured to reject said radio resource control (RRC) re-establishment request;
- the second base station is configured to determine whether a radio link failure (RLF) indication message is generated by a cell in which a radio resource control (RRC) establishment is performed by said mobile station, wherein the determination is performed via communication links linking the second base station with the first base station; and
- the second base station is configured to provide a single radio link failure (RLF) indication message to said first cell if said cell in which said radio resource control (RRC) establishment is performed does not generate said radio link failure (RLF) indication message.

## Patentansprüche

1. Verfahren zum Bereitstellen von Informationen in einem drahtlosen Zellenkommunikationssystem, wobei jede Zelle in dem drahtlosen Zellenkommunikationssystem durch eine Basisstation versorgt wird und das drahtlose Zellenkommunikationssystem eine Prozedur einsetzt, in der eine Mobilstation, die einen Funkverbindungsausfall (RLF) erleidet, während sie mit einer Zelle verbunden ist, versuchen kann, eine Verbindung in einer anderen Zelle wiederherzustellen, die folgenden Schritte **umfassend:**
- Detektieren eines Funkverbindungsausfalls (RLF) für die Mobilstation, während sie mit einer ersten Zelle verbunden ist;
- Anfordern einer Funkbetriebsmittelsteuerungs- bzw. RRC-Wiederherstellung für die Mobilstation in einer zweiten Zelle nach dem Funkverbindungsausfall (RLF); und
- Bereitstellen einer einzelnen Funkverbindungsausfalls- bzw. RLF-Angabenachricht an die erste Zelle,
**dadurch gekennzeichnet, dass**
die einzelne Funkverbindungsausfalls- bzw. RLF-Angabenachricht von einer Zelle erzeugt wird, in der eine Funkbetriebsmittelsteuerungs- bzw. RRC-Herstellung stattfindet und die Wiederherstellung nicht erfolgreich ist, wobei die einzelne Funkverbindungsausfalls- bzw. RLF-Angabenachricht einen von der Mobilstation produzierten Funkverbindungsausfalls- bzw. RLF-Bericht umfasst, wobei die zweite Zelle der Mobilstation angibt, ob die Mobilstation versuchen soll, den Funkverbindungsausfalls- bzw. RLF-Bericht bei der Funkbetriebsmittelsteuerungs- bzw. RRC-Herstellung zu liefern.

2. Verfahren nach Anspruch 1, wobei der Funkverbindungsausfalls- bzw. RLF-Bericht eine Zellenkennung (ID) einer Wiederherstellungszelle und einen Wert, der eine erste Zeitperiode *T* von der Funkbetriebsmittelsteuerungs- bzw. RRC-Wiederherstellungsanforderung bis zu einer Funkbetriebsmittelsteuerungs- bzw. RRC-Herstellung umfasst.

3. Verfahren nach Anspruch 1, wobei die Funkbetriebsmittelsteuerungs- bzw. RRC-Wiederherstellungsanforderung eine erste Markierung umfasst, die angibt, ob der Funkverbindungsausfalls- bzw. RLF-Bericht verfügbar ist oder nicht.

4. Verfahren nach Anspruch 3, wobei die erste Markierung in einer Nachricht "RRCConnectionReestablishmentRequest" (RRC-Verbindung-Wiederherstellung-Anforderung) enthalten ist.

5. Verfahren nach Anspruch 1, wobei die Angabe durch eine dritte Markierung, die in einer Nachricht "RRCConnectionReestablishmentReject" (RRC-Verbindung-Wiederherstellung-Zurückweisung) enthalten ist, repräsentiert wird.

6. Verfahren nach Anspruch 1, wobei die einzelne Funkverbindungsausfalls- bzw. RLF-Angabenachricht erzeugt wird, wenn eine Zelle, in der die Mobilstation eine Funkbetriebsmittelsteuerungs- bzw. RRC-Herstellung nach dem Funkverbindungsausfall (RLF) durchführt, dieselbe Zelle wie die zweite Zelle ist.

7. Verfahren nach Anspruch 6, wobei eine Funkbetriebsmittel-Zuteilungsbewilligung und ein Zeitversatzwert *T_{Offset}* der Mobilstation durch die zweite Zelle bereitgestellt wird, wobei die Funkbetriebsmittel-Zuteilungsbewilligung nach dem Zeitversatzwert *T_{Offset}* durch die Mobilstation zum Senden einer Funkbetriebsmittelsteuerungs- bzw. RRC-Verbindungsanforderungsnachricht verwendet wird.

8. Verfahren nach Anspruch 6, wobei die Mobilstation eine zweite Markierung setzt, die angibt, ob der Funkverbindungsausfalls- bzw. RLF-Bericht während einer Funkbetriebsmittelsteuerungs- bzw. RRC-Herstellung verfügbar ist, wenn die Funkbetriebsmittelsteuerungs- bzw. RRC-Herstellung in der zweiten Zelle durchgeführt wird.

9. Verfahren nach Anspruch 8, wobei die zweite Markierung in einer Nachricht "RRCConnectionRequest" (RRC-Verbindung-Anforderung) oder in einer Nachricht "RRCConnectionSetupComplete" (RRC-Verbindung-Einrichtung-Abschluss) enthalten ist.

10. Verfahren nach Anspruch 1, wobei der Schritt des Bereitstellens der Funkverbindungsausfalls- bzw. RLF-Angabenachricht beinhaltet:
- Übertragen der einzelnen Funkverbindungsausfalls- bzw. RLF-Angabenachricht an eine erste Basisstation, die die erste Zelle versorgt.

11. Verfahren nach Anspruch 10, wobei die einzelne Funkverbindungsausfalls- bzw. RLF-Angabenachricht durch eine zweite Basisstation, die die zweite Zelle versorgt, übertragen wird.

12. Verfahren nach Anspruch 10, wobei die Funkbetriebsmittelsteuerungs- bzw. RRC-Herstellung in einer dritten Zelle angefordert wird und die Funkverbindungsausfalls- bzw. RLF-Angabenachricht durch eine dritte Basisstation, die die dritte Zelle versorgt, übertragen wird, wobei die zweite und die dritte Zelle verschiedene Zellen sind.

13. Verfahren nach einem der Ansprüche 10-12, wobei die einzelne Funkverbindungsausfalls- bzw. RLF-Angabenachricht über eine oder mehrere X2-Schnittstellen übertragen wird.

14. Verfahren nach Anspruch 13, wobei, wenn die erste Zelle den Funkverbindungsausfalls- bzw. RLF-Bericht in der Funkverbindungsausfalls- bzw. RLF-Angabenachricht empfängt, wird der Funkverbindungsausfalls- bzw. RLF-Bericht in eine Übergabeberichtnachricht für Übertragung an eine vierte Zelle kopiert, wobei die vierte Zelle eine Zelle ist, mit der die Mobilstation vor der ersten Zelle verbunden war.

15. Verfahren nach Anspruch 1, wobei die Funkverbindungsausfalls- bzw. RLF-Angabenachricht nach Warten einer zweiten Zeitperiode *T_{Wait}* in der zweiten Zelle erzeugt wird.

16. Verfahren nach Anspruch 15, wobei das Erzeugen der Funkverbindungsausfalls- bzw. RLF-Angabenachricht annulliert wird, wenn eine Annullierungsnachricht von einer Zelle empfangen wird, in der die Mobilstation eine Funkbetriebsmittelsteuerungs- bzw. RRC-Herstellung nach dem Funkverbindungsausfall (RLF) durchführt.

17. Verfahren nach Anspruch 15, wobei das Erzeugen der Funkverbindungsausfalls- bzw. RLF-Angabenachricht ausgelöst wird, wenn ein Funkverbindungsausfalls- bzw. RLF-Bericht von einer erfolgreichen Funkbetriebsmittelsteuerungs- bzw. RRC-Herstellung von einer Zelle empfangen wird, in der die Mobilstation Funkbetriebsmittelsteuerungs- bzw. RRC-Herstellung nach dem Funkverbindungsausfall (RLF) durchführt.

18. Verfahren nach Anspruch 2 und 15, wobei eine Basisstation, die eine Zelle versorgt, in der eine Funkbetriebsmittelsteuerungs- bzw. RRC-Herstellung stattfindet, keine Funkverbindungsausfalls- bzw. RLF-Angabenachricht erzeugt, wenn die erste Zeitperiode *T* in dem Funkverbindungsausfalls- bzw. RLF-Bericht die zweite Zeitperiode *T_{Wait}* übersteigt.

19. Verfahren nach Anspruch 1, wobei die einzelne Funkverbindungsausfalls- bzw. RLF-Angabenachricht erzeugt wird, wenn eine Zelle, in der die Mobilstation eine Funkbetriebsmittelsteuerungs- bzw. RRC-Herstellung nach dem Funkverbindungsausfall (RLF) durchführt, zu derselben Basisstation wie die zweite Zelle gehört.

20. Verfahren nach Anspruch 19, wobei die Mobilstation über Zellen, die zu selben Basisstationen gehören, informiert wird.

21. Verfahren nach Anspruch 20, wobei die Informationen über Zellen, die zu selben Basisstationen gehören, in einer Nachricht "RRCConnectionReestablishmentReject" (RRC-Verbindung-Wiederherstellung-Zurückweisung) bereitgestellt wird.

22. Verfahren nach Anspruch 1, wobei eine Basisstation, die die erste Zelle versorgt, die einzelne Funkverbindungsausfalls- bzw. RLF-Angabenachricht zum Abstimmen einer oder mehrerer Mobilitätsparameter und/oder zum Bereitstellen einer oder mehrerer Leistungsmessungen verwendet.

23. Verfahren nach Anspruch 1, wobei das drahtlose Zellenkommunikationssystem ein beliebiges in der das Folgende umfassenden Gruppe ist: LTE, UMTS, CDMA2000, WiMaX und GERAN; die Basisstationen beliebige in der das Folgende umfassenden Gruppe sind: eNB, NodeB und BTS; und die Mobilstation eine beliebige in der das Folgende umfassenden Gruppe ist: UE, MS und SS.

24. Verfahren in einer Mobilstation zum Bereitstellen von Informationen in einem drahtlosen Zellenkommunikationssystem, wobei jede Zelle in dem drahtlosen Zellenkommunikationssystem durch eine Basisstation versorgt wird und das drahtlose Zellenkommunikationssystem eine Prozedur einsetzt, in der eine Mobilstation, die einen Funkverbindungsausfall (RLF) erleidet, während sie mit einer Zelle verbunden ist, versuchen kann, eine Verbindung in einer anderen Zelle wiederherzustellen, die folgenden Schritte **umfassend:**
- Detektieren eines Funkverbindungsausfalls (RLF), während sie mit einer ersten Zelle verbunden ist;
- Anfordern einer Funkbetriebsmittelsteuerungs- bzw. RRC-Wiederherstellung in einer zweiten Zelle nach dem Funkverbindungsausfall (RLF);
- Angeben, ob Informationen, die einen Funkverbindungsausfalls- bzw. RLF-Bericht umfassen, für die zweite Zelle verfügbar sind oder nicht;
**gekennzeichnet durch**
- Bereitstellen des Funkverbindungsausfalls- bzw. RLF-Berichts einer Zelle, in der eine Funkbetriebsmittelsteuerungs- bzw. RRC-Herstellung durchgeführt wird, nach Empfangen einer Zurückweisung der Funkbetriebsmittelsteuerungs- bzw. RRC-Wiederherstellungsanforderung, wobei die zweite Zelle der Mobilstation angibt, ob die Mobilstation versuchen soll, den Funkverbindungsausfalls- bzw. RLF-Bericht bei der Funkbetriebsmittelsteuerungs- bzw. RRC-Herstellung zu liefern.

25. Verfahren zum Bereitstellen von Informationen in einem drahtlosen Zellenkommunikationssystem, wobei jede Zelle in dem drahtlosen Zellenkommunikationssystem durch eine Basisstation versorgt wird und das drahtlose Zellenkommunikationssystem eine Prozedur einsetzt, in der eine Mobilstation, die einen Funkverbindungsausfall (RLF) erleidet, während sie mit einer Zelle verbunden ist, versuchen kann eine Verbindung in einer anderen Zelle wiederherzustellen, die folgenden Schritte **umfassend:**
- Empfangen, durch eine zweite Zelle, einer Funkbetriebsmittelsteuerungs- bzw. RRC-Wiederherstellungsanforderung von einer Mobilstation,
**gekennzeichnet durch**
- Registrieren, durch eine erste Zelle, eines Funkverbindungsausfalls (RLF) für die Mobilstation, während die Mobilstation mit der ersten Zelle verbunden ist;
- Zurückweisen der Funkbetriebsmittelsteuerungs- bzw. RRC-Wiederherstellungsanforderung durch die zweite Zelle;
- Bestimmen, durch die zweite Zelle, ob eine Funkverbindungsausfalls- bzw. RLF-Angabenachricht durch eine Zelle erzeugt wird, in der eine Funkbetriebsmittelsteuerungs- bzw. RRC-Herstellung durch die Mobilstation durchgeführt wird, wobei die Bestimmung über Kommunikationsverbindungen, die die zweite Zelle mit der Zelle verbinden, durchgeführt wird; und
- Bereitstellen, der ersten Zelle, einer einzelnen Funkverbindungsausfalls- bzw. RLF-Angabenachricht durch die zweite Zelle, wenn die Zelle, in der die Funkbetriebsmittelsteuerungs- bzw. RRC-Herstellung durchgeführt wird, die Funkverbindungsausfalls- bzw. RLF-Angabenachricht nicht erzeugt.

26. Computerprogramm, **gekennzeichnet durch** Codemittel, die, wenn sie in einem Computer ausgeführt werden, bewirken, dass der Computer das Verfahren nach Anspruch 25 ausführt.

27. Computerprogrammprodukt, umfassend ein computerlesbares Medium und ein Computerprogramm nach Anspruch 26, wobei das Computerprogramm in dem computerlesbaren Medium enthalten ist und aus einem oder mehreren aus der folgenden Gruppe besteht: ROM (Nur-Lese-Speicher), PROM (programmierbarer ROM), EPROM (löschbarer PROM), Flash-Speicher, EEPROM (elektrisch EPROM) und Festplattenlaufwerk.

28. Mobilstationsvorrichtung zum Bereitstellen von Informationen in einem drahtlosen Zellenkommunikationssystem, wobei jede Zelle in dem drahtlosen Zellenkommunikationssystem angeordnet ist, durch eine Basisstation versorgt zu werden, und das drahtlose Zellenkommunikationssystem eine Prozedur einsetzt, in der eine Mobilstation, die einen Funkverbindungsausfall (RLF) erleidet, während sie mit einer Zelle verbunden ist, versuchen kann, eine Verbindung in einer anderen Zelle wiederherzustellen, wobei die **Mobilstationsvorrichtung** konfiguriert ist zum:
- Detektieren eines Funkverbindungsausfalls (RLF), während sie mit einer ersten Zelle verbunden ist;
- Anfordern einer Funkbetriebsmittelsteuerungs- bzw. RRC-Wiederherstellung in einer zweiten Zelle nach dem Funkverbindungsausfall (RLF) in der ersten Zelle, **gekennzeichnet durch**
- Angeben, ob Informationen, die einen Funkverbindungsausfalls- bzw. RLF-Bericht umfassen, der zweiten Zelle verfügbar sind oder nicht;
- Bereitstellen des Funkverbindungsausfalls- bzw. RLF-Berichts einer Zelle, in der eine Funkbetriebsmittelsteuerungs- bzw. RRC-Herstellung durchgeführt wird, nach Empfangen einer Zurückweisung der Funkbetriebsmittelsteuerungs- bzw. RRC-Wiederherstellungsanforderung, wobei die zweite Zelle der Mobilstation angibt, ob die Mobilstation versuchen soll, den Funkverbindungsausfalls- bzw. RLF-Bericht bei der Funkbetriebsmittelsteuerungs- bzw. RRC-Herstellung zu liefern.

29. System von Basisstationsvorrichtungen zum Bereitstellen von Informationen in einem drahtlosen Zellenkommunikationssystem, wobei jede Zelle in dem drahtlosen Zellenkommunikationssystem angeordnet ist, durch eine Basisstation versorgt zu werden, und das drahtlose Zellenkommunikationssystem eine Prozedur einsetzt, in der eine Mobilstation, die einen Funkverbindungsausfall (RLF) erleidet, während sie mit einer Zelle verbunden ist, versuchen kann, eine Verbindung in einer anderen Zelle wiederherzustellen, wobei eine zweite Basisstation konfiguriert ist, eine Funkbetriebsmittelsteuerungs- bzw. RRC-Wiederherstellungsanforderung von einer Mobilstation zu empfangen,
**dadurch gekennzeichnet, dass**:
- eine erste Basisstation konfiguriert ist zum Registrieren eines Funkverbindungsausfalls (RLF) für die Mobilstation, während sie mit einer ersten Zelle verbunden ist;
- die zweite Basisstation konfiguriert ist zum Zurückweisen der Funkbetriebsmittelsteuerungs- bzw. RRC-Wiederherstellungsanforderung;
- die zweite Basisstation konfiguriert ist zum Bestimmen, ob eine Funkverbindungsausfalls- bzw. RLF-Angabenachricht durch eine Zelle erzeugt wird, in der eine Funkbetriebsmittelsteuerungs- bzw. RRC-Herstellung durch die Mobilstation durchgeführt wird, wobei die Bestimmung über Kommunikationsverbindungen, die die zweite Basisstation mit der ersten Basisstation verbinden, durchgeführt wird; und
- die zweite Basisstation konfiguriert ist zum Bereitstellen, der ersten Zelle, einer einzelnen Funkverbindungsausfalls- bzw. RLF-Angabenachricht, wenn die Zelle, in der die Funkbetriebsmittelsteuerungs- bzw. RRC-Herstellung durchgeführt wird, die Funkverbindungsausfalls- bzw. RLF-Angabenachricht nicht erzeugt.

## Revendications

1. Procédé de fourniture d'informations dans un système de communication sans fil cellulaire, dans lequel chaque cellule dans ledit système de communication sans fil cellulaire est desservie par une station de base, et ledit système de communication sans fil cellulaire emploie une procédure dans laquelle une station mobile subissant une défaillance de liaison radio (RLF) pendant qu'elle est connectée à une cellule peut tenter de rétablir une connexion dans une autre cellule, comprenant les étapes :
- de détection d'une défaillance de liaison radio (RLF) pour ladite station mobile pendant qu'elle est connectée à une première cellule ;
- de demande d'un rétablissement de commande de ressource radio (RRC) pour ladite station mobile dans une deuxième cellule après ladite défaillance de liaison radio (RLF) ; et
- de fourniture d'un message d'indication de défaillance de liaison radio (RLF) unique à ladite première cellule, **caractérisé en ce que**
ledit message d'indication de défaillance de liaison radio (RLF) unique est généré par une cellule dans laquelle un établissement de commande de ressource radio (RRC) a lieu et ledit rétablissement a échoué, dans lequel ledit message d'indication de défaillance de liaison radio (RLF) unique comprend un rapport de défaillance de liaison radio (RLF) produit par ladite station mobile, dans lequel ladite deuxième cellule indique à ladite station mobile si ladite station mobile doit tenter de livrer ledit rapport de défaillance de liaison radio (RLF) à l'établissement de commande de ressource radio (RRC).

2. Procédé selon la revendication 1, dans lequel ledit rapport de défaillance de liaison radio (RLF) comprend une identité de cellule (ID) d'une cellule de rétablissement, et une valeur représentant une première période T allant de ladite demande de rétablissement de commande de ressource radio (RRC) à un établissement de commande de ressource radio (RRC).

3. Procédé selon la revendication 1, dans lequel ladite demande de rétablissement de commande de ressource radio (RRC) comprend un premier drapeau indiquant si ledit rapport de défaillance de liaison radio (RLF) est disponible ou non.

4. Procédé selon la revendication 3, dans lequel ledit premier drapeau est contenu dans un message RRCConnectionReestablishmentRequest.

5. Procédé selon la revendication 1, dans lequel ladite indication est représentée par un troisième drapeau inclus dans un message RRCConnectionReestablishmentReject.

6. Procédé selon la revendication 1, dans lequel ledit message d'indication de défaillance de liaison radio (RLF) unique est généré si une cellule dans laquelle ladite station mobile réalise un établissement de commande de ressource radio (RRC) après ladite défaillance de liaison radio (RLF) est la même cellule que ladite deuxième cellule.

7. Procédé selon la revendication 6, dans lequel un octroi d'allocation de ressource radio et une valeur de décalage temporel *T_{Offset}* sont fournis à ladite station mobile par ladite deuxième cellule, ledit octroi d'allocation de ressource radio étant utilisé après ladite valeur de décalage temporel *T_{Offset}* par ladite station mobile pour envoyer un message de demande de connexion de commande de ressource radio (RRC).

8. Procédé selon la revendication 6, dans lequel ladite station mobile fixe un deuxième drapeau indiquant si ledit rapport de défaillance de liaison radio (RLF) est disponible pendant un établissement de commande de ressource radio (RRC) si ledit établissement de commande de ressource radio (RRC) est réalisé dans ladite deuxième cellule.

9. Procédé selon la revendication 8, dans lequel ledit deuxième drapeau est contenu dans un message RRCConnectionRequest ou dans un message RRCConnectionSetupComplete.

10. Procédé selon la revendication 1, dans lequel ladite étape de fourniture dudit message d'indication de défaillance de liaison radio (RLF) implique :
- la transmission dudit message d'indication de défaillance de liaison radio (RLF) unique à une première station de base desservant ladite première cellule.

11. Procédé selon la revendication 10, dans lequel ledit message d'indication de défaillance de liaison radio (RLF) unique est transmis par une deuxième station de base desservant ladite deuxième cellule.

12. Procédé selon la revendication 10, dans lequel ledit établissement de commande de ressource radio (RRC) est demandé dans une troisième cellule, et ledit message d'indication de défaillance de liaison radio (RLF) est transmis par une troisième station de base desservant ladite troisième cellule, dans lequel lesdites deuxième et troisième cellules sont des cellules différentes.

13. Procédé selon l'une quelconque des revendications 10 à 12, dans lequel ledit message d'indication de défaillance de liaison radio (RLF) unique est transmis sur une ou plusieurs interfaces X2.

14. Procédé selon la revendication 13, dans lequel si ladite première cellule reçoit ledit rapport de défaillance de liaison radio (RLF) dans ledit message d'indication de défaillance de liaison radio (RLF) ledit rapport de défaillance de liaison radio (RLF) est copié dans un message de rapport de transfert pour transmission à une quatrième cellule, ladite quatrième cellule étant une cellule à laquelle ladite station mobile a été connectée avant ladite première cellule.

15. Procédé selon la revendication 1, dans lequel ledit message d'indication de défaillance de liaison radio (RLF) est généré après attente d'une seconde période *T_{Wait}* dans ladite deuxième cellule.

16. Procédé selon la revendication 15, dans lequel ladite génération dudit message d'indication de défaillance de liaison radio (RLF) est annulée si un message d'annulation est reçu d'une cellule dans laquelle ladite station mobile réalise un établissement de commande de ressource radio (RRC) après ladite défaillance de liaison radio (RLF).

17. Procédé selon la revendication 15, dans lequel ladite génération dudit message d'indication de défaillance de liaison radio (RLF) est déclenchée si un rapport de défaillance de liaison radio (RLF) issu d'un établissement de commande de ressource radio (RRC) réussi est reçu d'une cellule dans laquelle ladite station mobile réalise un établissement de commande de ressource radio (RRC) après ladite défaillance de liaison radio (RLF).

18. Procédé selon les revendications 2 et 15, dans lequel une station de base desservant une cellule où un établissement de commande de ressource radio (RRC) a lieu ne génère pas de message d'indication de défaillance de liaison radio (RLF) si ladite première période T dans ledit rapport de défaillance de liaison radio (RLF) excède ladite seconde période *T_{Wait}.*

19. Procédé selon la revendication 1, dans lequel ledit message d'indication de défaillance de liaison radio (RLF) unique est généré si une cellule dans laquelle ladite station mobile réalise un établissement de commande de ressource radio (RRC) après ladite défaillance de liaison radio (RLF) appartient à la même station de base que ladite deuxième cellule.

20. Procédé selon la revendication 19, dans lequel ladite station mobile est informée à propos de cellules appartenant à des mêmes stations de base.

21. Procédé selon la revendication 20, dans lequel lesdites informations à propos de cellules appartenant aux mêmes stations de base sont fournies dans un message RRCConnectionReestablishmentReject.

22. Procédé selon la revendication 1, dans lequel une station de base desservant ladite première cellule utilise ledit message d'indication de défaillance de liaison radio (RLF) unique pour syntoniser un ou plusieurs paramètres de mobilité et/ou fournir une ou plusieurs mesures de performance.

23. Procédé selon la revendication 1, dans lequel ledit système de communication sans fil cellulaire est l'un quelconque dans le groupe comprenant : LTE, UMTS, CDMA2000, WiMaX et GERAN ; lesdites stations de base sont l'une quelconque dans le groupe comprenant : eNB, NodeB et BTS ; et ladite station mobile est l'une quelconque dans le groupe comprenant : UE, MS et SS.

24. Procédé dans une station mobile de fourniture d'informations dans un système de communication sans fil cellulaire, dans lequel chaque cellule dans ledit système de communication sans fil cellulaire est desservie par une station de base, et ledit système de communication sans fil cellulaire emploie une procédure dans laquelle une station mobile subissant une défaillance de liaison radio (RLF) pendant qu'elle est connectée à une cellule peut tenter de rétablir une connexion dans une autre cellule, comprenant les étapes :
- de détection d'une défaillance de liaison radio (RLF) pendant qu'elle est connectée à une première cellule ;
- de demande d'un rétablissement de commande de ressource radio (RRC) dans une deuxième cellule après ladite défaillance de liaison radio (RLF) ;
- d'indication consistant à savoir si des informations comprenant un rapport de défaillance de liaison radio (RLF) sont disponibles ou non à ladite deuxième cellule; **caractérisé par**
- la fourniture dudit rapport de défaillance de liaison radio (RLF) à une cellule où un établissement de commande de ressource radio (RRC) est réalisé après réception d'un rejet de ladite demande de rétablissement de commande de ressource radio (RRC), dans lequel ladite deuxième cellule indique à ladite station mobile si ladite station mobile doit tenter de livrer ledit rapport de défaillance de liaison radio (RLF) à l'établissement de commande de ressource radio (RRC).

25. Procédé de fourniture d'informations dans un système de communication sans fil cellulaire, dans lequel chaque cellule dans ledit système de communication sans fil cellulaire est desservie par une station de base, et ledit système de communication sans fil cellulaire emploie une procédure dans laquelle une station mobile subissant une défaillance de liaison radio (RLF) pendant qu'elle est connectée à une cellule peut tenter de rétablir une connexion dans une autre cellule, comprenant les étapes :
- de réception par une deuxième cellule d'une demande de rétablissement de commande de ressource radio (RRC) d'une station mobile, **caractérisé par**
- l'enregistrement par une première cellule d'une défaillance de liaison radio (RLF) pour ladite station mobile pendant que la station mobile est connectée à la première cellule;
- le rejet de ladite demande de rétablissement de commande de ressource radio (RRC) par la deuxième cellule ;
- la détermination par la deuxième cellule pour savoir si un message d'indication de défaillance de liaison radio (RLF) est généré par une cellule dans laquelle un établissement de commande de ressource radio (RRC) est réalisé par ladite station mobile, dans lequel la détermination est réalisée via des liaisons de communication reliant la deuxième cellule à la cellule; et
- la fourniture d'un message d'indication de défaillance de liaison radio (RLF) unique par la deuxième cellule à ladite première cellule si ladite cellule dans laquelle ledit établissement de commande de ressource radio (RRC) est réalisé ne génère pas ledit message d'indication de défaillance de liaison radio (RLF).

26. Programme d'ordinateur, **caractérisé par** un moyen de code qui, lorsqu'il fonctionne sur un ordinateur, amène ledit ordinateur à exécuter ledit procédé selon la revendication 25.

27. Produit programme d'ordinateur comprenant un support lisible par ordinateur et un programme d'ordinateur selon la revendication 26, dans lequel ledit programme d'ordinateur est inclus dans le support lisible par ordinateur, et consiste en un ou plusieurs éléments du groupe : ROM (mémoire morte), PROM (ROM programmable), EPROM (PROM effaçable), mémoire flash, EEPROM (EPROM électriquement) et lecteur de disque dur.

28. Dispositif de station mobile pour fournir des informations dans un système de communication sans fil cellulaire, dans lequel chaque cellule dans ledit système de communication sans fil cellulaire est agencée pour être desservie par une station de base, et ledit système de communication sans fil cellulaire emploie une procédure dans laquelle une station mobile subissant une défaillance de liaison radio (RLF) pendant qu'elle est connectée à une cellule peut tenter de rétablir une connexion dans une autre cellule, le dispositif de station mobile étant configuré pour :
- détecter une défaillance de liaison radio (RLF) pendant qu'il est connecté à une première cellule ;
- demander un rétablissement de commande de ressource radio (RRC) dans une deuxième cellule après ladite défaillance de liaison radio (RLF) dans la première cellule, **caractérisé par**
- l'indication consistant à savoir si des informations comprenant un rapport de défaillance de liaison radio (RLF) sont disponibles ou non à ladite deuxième cellule;
et
- fournir ledit rapport de défaillance de liaison radio (RLF) à une cellule où un établissement de commande de ressource radio (RRC) est réalisé après réception d'un rejet de ladite demande de rétablissement de commande de ressource radio (RRC), dans lequel ladite deuxième cellule indique à ladite station mobile si ladite station mobile doit tenter de livrer ledit rapport de défaillance de liaison radio (RLF) à l'établissement de commande de ressource radio (RRC).

29. Système de dispositifs de station de base pour fournir des informations dans un système de communication sans fil cellulaire, dans lequel chaque cellule dans ledit système de communication sans fil cellulaire est agencée pour être desservie par une station de base, et ledit système de communication sans fil cellulaire emploie une procédure dans laquelle une station mobile subissant une défaillance de liaison radio (RLF) pendant qu'elle est connectée à une cellule peut tenter de rétablir une connexion dans une autre cellule, dans lequel - une deuxième station de base est configurée pour recevoir une demande de rétablissement de commande de ressource radio (RRC) d'une station mobile, **caractérisé par** :
- une première station de base configurée pour enregistrer une défaillance de liaison radio (RLF) pour ladite station mobile pendant qu'elle est connectée à une première cellule;
- la deuxième station de base configurée pour rejeter ladite demande de rétablissement de commande de ressource radio (RRC) ;
- la deuxième station de base configurée pour déterminer si un message d'indication de défaillance de liaison radio (RLF) est généré par une cellule dans laquelle un établissement de commande de ressource radio (RRC) est réalisé par ladite station mobile, dans lequel la détermination est réalisée via des liaisons de communication reliant la deuxième station de base à la première station de base ; et
- la deuxième station de base configurée pour fournir un message d'indication de défaillance de liaison radio (RLF) unique à ladite première cellule si ladite cellule dans laquelle ledit établissement de commande de ressource radio (RRC) est réalisé ne génère pas ledit message d'indication de défaillance de liaison radio (RLF).
